# EUROPÄISCHE PATENTSCHRIFT

(11) **EP 1 320 777 B1**
(45) Veröffentlichungstag und Bekanntmachung des Hinweises auf die Patenterteilung: **16.03.2005**
(21) Anmeldenummer: 01985758.0
(22) Anmeldetag: 21.09.2001
(51) Int. Cl.: G02B 6/38

(54) **KUPPLUNGSEINRICHTUNG FÜR GLASFASERVERBINDER**
COUPLING DEVICE FOR GLASS FIBER CONNECTORS
DISPOSITIF DE RACCORD POUR CONNECTEUR DE FIBRES OPTIQUES

(30) Priorität: 26.09.2000 DE 10047898; 11.08.2001 DE 10139670
(43) Veröffentlichungstag der Anmeldung: 25.06.2003
(73) Patentinhaber: KRONE GmbH, 14167 Berlin (DE)
(72) Erfinder: KAHLE, Eberhard, 12557 Berlin (DE); BENEDETTO, Adrian, 12103 Berlin (DE); ADOMEIT, Jörg, 12307 Berlin (DE); BRUNZEL, Joachim, 14163 Berlin (DE)
(86) Internationale Anmeldenummer: PCT/EP2001/010934
(87) Internationale Veröffentlichungsnummer: WO 2002/027373

(56) Entgegenhaltungen:
- EP-A- 0 560 230
- EP-A- 0 730 177
- DE-A- 19 853 982
- US-A- 4 418 983
- US-A- 5 673 346
- PATENT ABSTRACTS OF JAPAN vol. 007, no. 241 (P-232), 26. Oktober 1983 (1983-10-26) -& JP 58 129409 A (MATSUSHITA DENKO KK), 2. August 1983 (1983-08-02)
- PATENT ABSTRACTS OF JAPAN vol. 1996, no. 09, 30. September 1996 (1996-09-30) & JP 08 122570 A (SEIKO INSTR INC), 17. Mai 1996 (1996-05-17)
- PATENT ABSTRACTS OF JAPAN vol. 1996, no. 04, 30. April 1996 (1996-04-30) & JP 07 318758 A (NIPPON SHEET GLASS CO LTD), 8. Dezember 1995 (1995-12-08)

## Beschreibung

Die Erfindung betrifft eine Kupplungseinrichtung für Glasfaserverbinder mit einer Frontplatte und Kupplungen, die von der Frontseite her in die Frontplatte einsetzbar sind.

Steckverbinder und Glasfaserverbinder sind unter anderem aus der EP 0 590 586 A1 oder der US 5,317,663 bekannt. Diese Kupplung für Glasfaserverbinder ist von der Frontseite her in eine Frontplatte einsetzbar und offenbart auch eine mittels die Frontplatte hintergreifender Rastfeder arretierbare Kupplung. Die Kupplung für Glasfaserverbinder besteht aus einem Gehäuse mit zwei als frontseitige und rückwärtige Steckeraufnahmen ausgebildeten Enden für die Aufnahme von Steckern, sowie vom Gehäuse vorspringende Flansche, geeignet zur Anlage an die Frontplatte und zur dortigen Arretierung der Kupplung mit mindestens einer Rastfeder, die auf der Kupplung zum Hintergreifen der Frontplatte angeordnet ist. Eine derartige Rastfeder hat zwei Federnasen an gegenüberliegenden Seiten der rückwärtigen Steckeraufnahme . Die Rastfedern sind als Blattfedern ausgebildet, welche durch einen entsprechenden Durchbruch in der Frontplatte greifen und so die Kupplung in der Frontplatte arretieren. Dazu kann die Blattfeder bzw. Federzunge soweit an das Kupplungsgehäuse gepreßt werden, daß die Blattfeder bzw. die Federnase die Frontplatte in gepreßtem Zustand durchgreift und sich anschließend spreizt.
Die Verwendung einer derartigen Kupplung oder Kupplungseinrichtung bedingt, daß die Frontplatte entsprechende Durchbrüche aufweist und die Frontplatte muß durch entsprechende Gestaltung mit einem speziellen Durchbruch versehen sein, um Kupplungen dort zu arretieren; die Kupplung muss von der Rückseite der Frontplatte gelöst werden

Von der Telefontechnik und von LAN - Netzwerken (EP 0 766 350 A2) sind weiterhin Steckverbinder mit von der Frontseite eines Gehäuses bzw. einer Frontplatte her lösbaren Rasteinrichtungen, die aus der Frontplatte ragen, bekannt. Hier ist ein unbeabsichtigtes Lösen möglich und es wird relativ viel Platz zum Ergreifen der Rasteinrichtung mit der Hand benötigt.

Aus der EP 0 560 230 A1 ist ein Befestigungssockel für Fiber-Optik-Anschlussmodule bekannt, bestehend aus einer Halterung, die mit einer Befestigungsstange zum Einhängen eines der Enden von einer oder zwei nebeneinanderliegenden Anschlussmodulen versehen ist, wobei die Halterung als ein aus elastischem Kunststoff bestehendes, rinnenförmiges Klemmführungsstück mit einem an einer Stirnseite vorgesehenen, abragenden Bügel ausgebildet ist, dessen Quersteg die Befestigungsstange bildet, wobei die beiden Schenkel und der diese verbindende Steg des Klemmführungsstückes jeweils mit mindestens einem federnd ausgebildeten Rasthaken und diesen zugeordneten Anschlagflächen zur Anlage und Befestigung an einem Öffnungsrand einer Montageplatte versehen sind. Vorzugsweise ist das Klemmführungsstück U-förmig mit senkrecht von dem Quersteg abstehenden Schenkeln ausgebildet, wobei die Montageplatte mit im Wesentlichen rechteckigen Offnungsbereichen zum Einsetzen eines oder mehrerer der Klemmführungsstücke versehen ist. Dabei sind jedem. Öffnungsbereich der Montageplatte zwei angeordnete, in dem Öffnungsbereich hereinragende Laschen zugeordnet, die im Bereich der Oberkante der Schenkel des Klemmführungsstückes liegen, wobei jeweils zwei Laschen einer am gegenüberliegenden Öffnungsrand vorgesehene Aussparrung zugeordnet ist, die im Bereich einer der Außenseite des Quersteges zugeordneten Rastnase liegt. Diese Ausgestaltung ermöglicht es daher, die Laschen zum Zusammenwirken mit den Rasthaken auszunützen, die so ausgebildet werden, dass ihre Anschlagflächen auf einer Seite der Montageplatten liegen, während die Rasthaken selbst auf der gegenüberliegenden Seite sind. Die Rasthaken lassen sich daher nach dem Einschnappen durch seitlichen Druck wieder öffnen, wenn dies gewünscht ist. Die Aussparrung am anderen Rand dient dabei dazu, das Einführen eines Werkzeuges zu ermöglichen, mit dem die Rastnase am Quersteg so zur Seite gedrückt werden kann, dass die Demontage möglich wird.

Aus der US-5,673,346 ist ein optischer Stecker für einen optischen Steckverbinder bekannt, wobei die Buchsen hinter einer Frontplatte angeordnet und verschraubt sind.

Aus dem Patent Abstracts of Japan vol. 007, no. 241 (P-232), 26.10.83 & JP 58 12 94 09 A (Matsushita Denko KK), 02.08.1983 ist eine optische Kupplung bekannt, bei der die rückwärtige Steckeraufnahme einen Federrahmen umfasst, aus dem eine Federzunge im gesteckten Zustand hervorragt und somit die Kupplung durch hintergreifen einer Frontplatte arretiert. Ebenso offenbart die Druckschrift ein Verschrauben der Kupplung mit der Frontplatte.

Aus der EP 0 730 177 A2 ist eine Kupplung für Glasfaserverbinder bekannt, die von der Frontseite in eine Frontplatte einsetzbar ist und mittels die Frontplatte hintergreifender Rastfeder arretierbar ist, wobei die die Rastfeder umfassende Kragenhalterung zweiteilig ausgebildet ist. Dabei sind zwei Rastfedern vorgesehen, die sich durch gegenläufige Federbeine jeweils an einer Seite des Gehäuses der Kupplung abstützen.

Der Erfindung liegt daher das technische Problem zugrunde, eine Kupplungseinrichtung für Glasfaserverbinder mit einer Frontplatte und mindestens einer Kupplung zu schaffen, wobei die Kupplung mit einfachen Mitteln von der Frontseite her einsetzbar, arretierbar und wieder lösbar ist.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu besteht die Rastfeder aus zwei Wangen, die sich an zwei Seitenflächen der Kupplung anschmiegen und diese Wangen Rasten bzw. Federnasen haben, die sich hinter oder in der Frontplatte verhaken können. Diese beiden Wangen der Rastfeder werden durch eine Druckplatte, die die dritte Seitenfläche der Kupplung umgreift verbunden. Die Druckplatte stützt sich mittels Federbein an der Kupplung ab, wobei dieses Federbein ein integral auskragendes Element der Druckplatte selbst sein kann oder ein zusätzlich angebrachtes Element unter der Druckplatte, welches relativ zu einer Gehäuseseite der Kupplung dort eine federnde Abstützung bewirkt.

Dabei ist die Druckplatte im gestreckten Zustand der Kupplung von der Frontseite her zugänglich und die Federnase hintergreift die Frontplatte, wobei durch Druck auf die Druckplatte die Kupplung wieder entriegelbar ist.

Die Wangen selbst können vorteilhafterweise mit einer Einkerbung oder einem Umgriff versehen sein, der sich hinter einem Rücksprung des Flansches abstützt und dort positionierbar ist, so daß bei einem Druck auf die Druckplatte sich zwar der Abstand zwischen den Wangen und dem Flansch verändern kann, wobei sich die Wangen weiterhin an den Seitenflächen anschmiegen, jedoch Ihre Position gegenüber der dritten Seitenfläche, an der die Druckplatte und das Federbein angebracht sind, leicht verschiebt. Wenn die Wangen innerhalb der Kontur der Kupplung liegen, muß in der Frontplatte lediglich ein Durchbruch ohne weitere Rücksprünge eingebracht werden, der ein Passieren des Kupplungsgehäuses an sich ermöglicht.
Somit reicht eine einfache rechteckige oder quadratische Stanzung in der Frontplatte aus, um den Stecker mitsamt der Kupplung und seiner Rastfeder zu montieren und in der Frontplatte zu arretieren. Bei der Arretierung wird die Druckplatte gegen die Kraft des Federbeines zusammengepreßt und dann der Kupplungsteil, genauer das Kupplungsgehäuse, samt Rastfeder in die Ausnehmung der Frontplatte eingeschoben, dann die Druckplatte entlastet, so daß entsprechende Rastnasen an den Wangen die Frontplatte hintergreifen können. Damit ist Formschluß erzielt und die Kupplung kann auch wieder einzeln entnommen werden.
In einem Ausführungsbeispiel bildet die Raste an der Wange das Ende der Einkerbung, die dann natürlich mindestens so lang ist wie der Flansch und die Frontplatte dick sind.

Gemäß einer Weiterbildung nimmt der Rücksprung am Flansch auch fast die gesamte Seitenfläche der Kupplung zwischen dem Flansch oder bei beidseitiger Anordnung und Flanschen zwischen beiden Flanschen und den frontseitigen und rückwärtigen Steckeraufnahme-Öffnungen ein. Mit anderen Worten zwischen den Steckeraufnahme-Öffnungen springt die gesamte Seitenfläche des Kupplungsgehäuses zurück und bietet somit genügend Platz für die angeschmiegten Wangen der Feder.
Der Einfachheit halber sollte beispielsweise bei einem Kupplungsgehäuse mit rechteckigem Querschnitt auf beiden Schmalseiten der Kupplung je ein Flansch mit jeweils einer Rastfeder angeordnet sein, die gegenläufig zusammengepreßt werden können und nach Passieren der Frontplatte sich aufgrund der Wirkung der Federbeine unter der Druckplatte selbständig entspannen, wenn keine Kraft mehr auf die Druckplatte aufgebracht wird. Wie für sich bekannt, kann die Rastfeder aus Metall oder Kunststoff oder beschichtetem Metall bestehen, wie es der Fachmann aus dem Stand der Technik kennt.
Eine solcher Art ausgebildete Rastfeder kann auch für Duplexstecker in gleicher einfacher Weise Verwendung finden.

Die Erfindung soll anhand einer schematischen Zeichnung mit Ausführungsbeispielen näher erläutert werden. Es zeigen:
- Fig. 1 a: eine perspektivische Draufsicht auf eine erfindungsgemäße Rastfeder,
- Fig. 1b: einen Schnitt B-B durch Fig. 1 a;
- Fig. 2: eine perspektivische Ansicht einer Simplexkupplung mit montierten Rastfedem nach Fig. 1a, b;
- Fig. 3: eine perspektivische Ansicht einer. Duplexpkupplung mit montierten Rastfedern nach Fig. 1a, b;
- Fig. 4: eine Seitenansicht mit einer Darstellung des Montagevorganges einer Simplexkupplung in einer Frontplatte.

Im Folgenden werden identische Bezugszeichen für identisch oder gleichwirkende Teile benutzt.

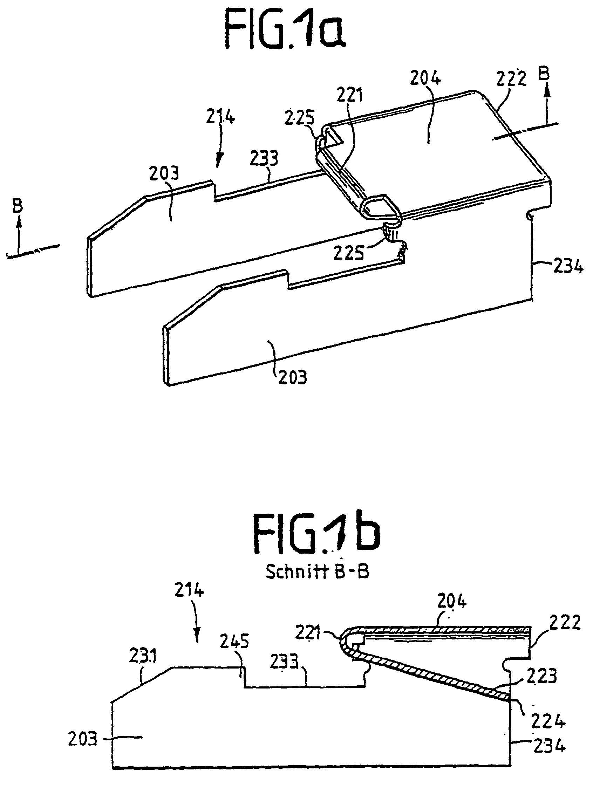

Fig. 1 a zeigt in perspektivischer Draufsicht die erfindungsgemäße Rastfeder 214 für eine Kupplung, bestehend im wesentlichen aus zwei Seitenwangen 203 und einer die Seitenwangen 203 verbindenden Druckplatte 204.

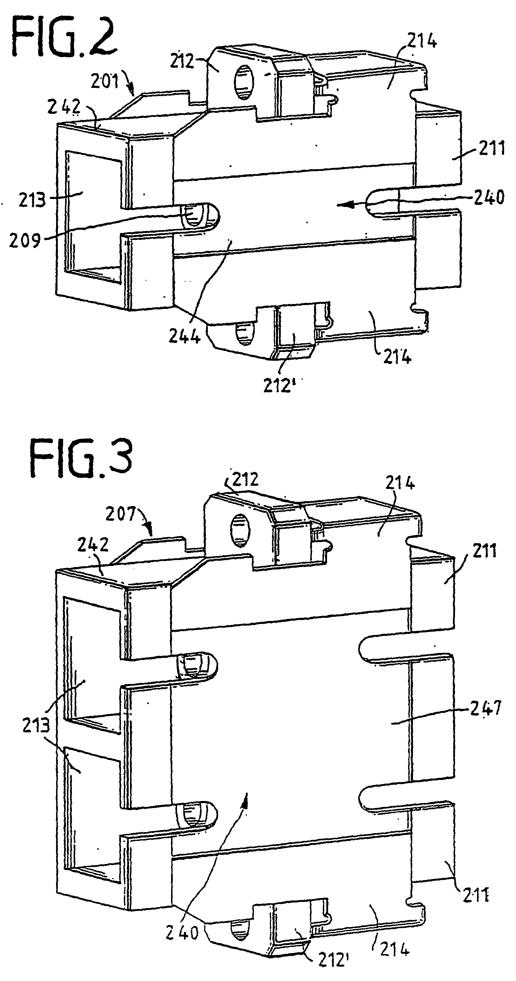

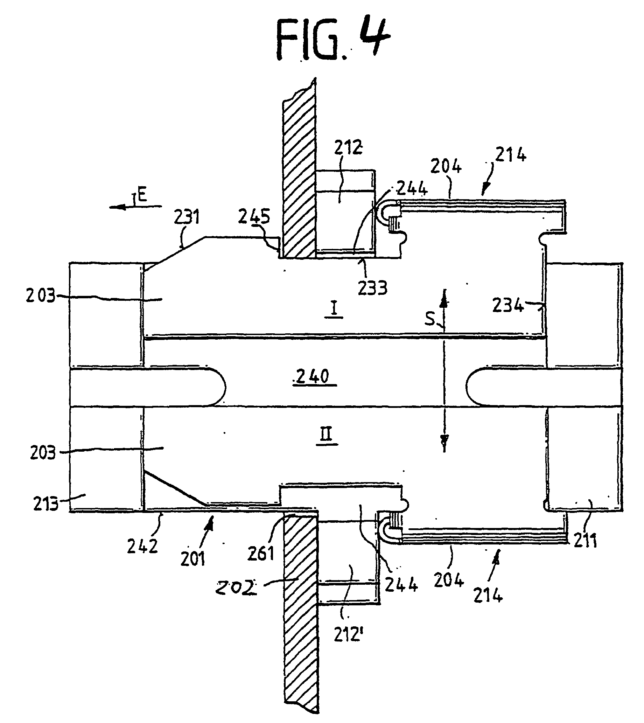

In Fig. 1 b gemäß Schnitt B-B durch die Rastfeder gemäß Fig. 1a ist zu sehen, daß die Druckplatte 204 als integralen Bestandteil ein Federbein 223 aufweist, welches sich am frontseitigen Plattenanfang 221 der Druckplatte 204 beginnend unter der Druckplatte 204 erstreckt und mit einem Auflager 224 auf die nicht dargestellt Kupplung bzw. der Oberseite des Kupplungsgehäuses abstützen kann. Es ist klar, daß sich dieses Federbein 223 bei Abstützung am Auflager 224 auf dem Gehäuse und entsprechendem Vertikaldruck auf die Druckplatte 204 weiter in Richtung Druckplatte 204 biegen kann. Die Wange 203 weist eine Fase 231 für ein Erleichtern des Durchschiebens der Feder 214 durch Ausnehmung 261 der Frontplatte 202 auf. Hinter der Frontplatte 202 gelangt die Federnase 245 der Wange 203 zur Anlage. Der Umgriff 233 dient der Fixierung der Rastfeder 214 hinter dem Flansch der nicht dargestellten Kupplung, wie dies insbesondere aus Fig. 4 hervorgeht. Das hintere Plattenende 222 und die abgebogenen Laschen 225 sowie das Wangenende 234 dienen der Abstützung der Rastfeder und ihrer Lagesicherung an der Steckeraufnahme 211 (Fig. 2 bis 4).

Fig. 2 zeigt eine Simplexkupplung 201 mit Flansch 212 bzw. 212' auf den Schmalseiten 242, der im Querschnitt rechteckigen Kupplung 201. Eine rückwärtige Steckeraufnahme 213 und eine frontseitige Steckeraufnahme 211 dienen dem Einschub von Steckverbindern, um mit der Steckerstiftzentrierhülse 209 in Wirkverbindung zu treten. Die Rastfeder 214 sitzt hinter den Flanschen 212, 212' und stützt sich mit dem hier nicht sichtbaren Federbein auf der Schmalseite 242 des Kupplungsgehäuses der Simplexkupplung 201 ab, wobei sich die Seitenwangen 203 in Rücksprüngen 244, die zugleich Seitenflächen der Simplexkupplung 201 bilden, anschmiegen und so innerhalb der Konturen, der den größten Querschnitt bildenden Steckeraufnahmen 213, 211 verschwinden, so daß die Seitenoberflächen der Steckeraufnahmen 213, 211 und die Oberfläche der Wange 203, welche auf der Seitenfläche 240 eng anliegen, eine gemeinsame Oberfläche relativ zu der Frontplatte 202 (Fig. 4) bilden.

Fig. 3 zeigt in ähnlicher Weise das Gehäuse einer Duplexkupplung 207 für jeweils zwei rückwärtige Steckeraufnahmen 213 und zwei frontseitige Steckeraufnahmen 211. Hier sind ebenfalls die Seitenflächen 240 mit Rücksprüngen 247 ausgebildet, die zwischen den Steckeraufnahmen 213, 211 und den Flanschen 212, 212' liegen.

Fig. 4 zeigt im Schnitt eine Frontplatte 202 mit Ausnehmung 261 und einem einfachen rechteckigen Durchbruch. Die beiden Rastfedern 214 sind in Montageposition gezeigt, wobei oben mit der Lagebezeichnung I eine bereits arretierte Kupplungssituation dargestellt ist, während in der unteren Hälfte mit der Lagebezeichnung II noch Druck auf die Druckplatte 204 ausgeübt ist und so die Rastfeder mit ihrer Wange 203 auf der Seitenfläche 240 der Simplexkupplung 201 etwas verschoben ist entgegen der Spreizrichtung S der beiden Rastfedern 214.
In die dargestellte Position wurde die fertig montierte Simplexkupplung gemäß Fig. 2 gebracht, indem zunächst die beiden Druckplatten 204 entgegen der Spreizrichtung S zusammengepreßt wurden und dann die Simplexkupplung 201 in Einschubrichtung E durch die Ausnehmung 261 der Frontplatte 202 geschoben wurde. Es besteht auch die Möglichkeit die Kupplung 201, 207 mit der Rasterfeder 214 ohne ein Zusammenpressen der Druckplatte 204 in die Ausnehmung 261 der Frontplatte 202 einzubauen, wenn durch eine entsprechend schräg geformte Fase 231 beim Einschieben in die Ausnehmung der Frontplatte 202 die beiden Raserfedern 214 selbsttätig zusammengepreßt werden und so die Ausnehmung passieren. Die Lage I zeigt nach Entlastung der Druckplatte 204 wie die Federnase 245 die Frontplatte 202 hintergreift und so einen Formschluß für die Simplexkupplung 201 in der Frontplatte 202 erzeugt. Hier ist deutlich zu sehen, daß die seitlichen Wangen 203 der Rastfeder 214 einen sicheren Halt zwischen den vorspringenden Steckeraufnahmen 213, 211 im Rücksprung 244 zwischen den Flanschen 212, 212' haben. Für die Demontage ist also lediglich mit zwei Fingern entgegen der Spreizrichtung S Druck auf die Druckplatten 204 auszuüben, damit die Seitenwangen 203 sich aufeinander zu bewegen und die Simplexkupplung 201 wieder entriegelt werden kann von der Frontplatte 202 und so aus der Ausnehmung 261 in der Frontplatte entnehmbar ist.

### Bezugszeichenliste

- 201: Simplexkupplung
- 202: Frontplatte
- 203: Wange
- 204: Druckplatte
- 207: Duplexkupplung
- 209: Steckerstiftzentrierhülse
- 211: frontseitige Steckeraufnahme
- 212, 212': Flansch
- 213: rückwärtige Steckeraufnahme
- 214: Rastfeder
- 221: Frontseitiger Plattenanfang
- 222: frontseitiges Plattenende
- 223: Federbein
- 224: Auflager
- 225: Lasche
- 231: Fase
- 245: Federnase
- 233: Umgriff
- 234: Wangenende
- 240: Seitenfläche
- 242: Kupplungsschmalseite
- 244: Rücksprung
- 247: Rücksprung
- 261: Ausnehmung

- a: Abstand
- S: Spreizrichtung
- LS: Steckbreite
- E: Einschubrichtung
- I, II: Montagelage

## Patentansprüche

1. Kupplungseinrichtung für Glasfaserverbinder mit einer Frontplatte (202) mit Stecköffnungen und mindestens einer Kupplung (201, 207), die von der Frontseite in eine Stecköffnung der Frontplatte (202) einsetzbar ist und mit einer die Frontplatte (202) hintergreifenden Rastfeder (214), mittels welcher die Kupplung in der Frontplatte arretierbar ist, wobei die Kupplung (201,207) von der Frontseite her lösbar ist, wobei die Kupplung ein Gehäuse mit (201, 207) mindestens einer frontseitigen Steckeraufnahme (211), einer rückwärtigen Steckeraufnahme (213) und einen Flansch (212, 212') aufweist der vom Gehäuse vorspringt und zur Anlage an die Frontplatte geeignetist,
**dadurch gekennzeichnet, dass**
die Rastfeder (214) zwei Wangen, die sich seitlich an zwei gegenüber liegende Außenwänder des Kupplungsgehäuse anschmiegen (203) und eine Druckplatte (204) umfasst, wobei die Wangen (203) mit Fedemasen (245) ausgebildet sind und über die Druckplatte (204) miteinander verbunden sind, wobei die Druckplatte (204) ein Federbein (223) aufweist, mittels dessen sich die Druckplatte (204) auf einer dritten Außenfläche des Gehäuses der Kupplung (201, 207) abstützt, wobei die Druckplatte (204) im gesteckten Zustand der Kupplung (201, 207) von der Frontseite her zugänglich ist und die Federnasen (245) die Frontplatte (202) hintergreifen wobei durch Druck auf die Druckplatte (204) die Kupplung (201, 207) wieder entriegelbar und aus der Frontplatte herausnehmbar ist.

2. Kupplungseinrichtung nach Anspruch 1, **dadurch gekennzeichnet, dass** die Wangen (203) innerhalb der Kontur der Kupplung liegen und die Stecköffnungen der Frontplatte (202) als einfache rechteckförmige Stanzung ausgebildet ist.

3. Kupplungseinrichtung nach Anspruch 1 oder 2, **dadurch gekennzeichnet, dass** die Wangen (203) einen Umgriff (233) aufweisen, der hinter einem Rücksprung (244, 247) des Flansches (212, 212') positionierbar ist.

4. Kupplungseinrichtung nach einem der vorhergehenden Ansprüche, **dadurch gekennzeichnet, dass** an der Kupplung (201, 207) an gegenüberliegenden Seiten Rastfedem (214) angeordnet sind, deren Federbeine (223) sich gegenläufig abstützen.

5. Kupplungseinrichtung nach einem der vorhergehenden Ansprüche, **dadurch gekennzeichnet, dass** die Kupplung als Simplex- oder Duplexkupplung ausgebildet ist.

6. Kupplungseinrichtung nach einem der vorhergehenden Ansprüche, **dadurch gekennzeichnet, dass** die Frontplatte (202) und/oder die Rastfeder (214) aus Metall oder Kunststoff oder beschichtetem Metall besteht.

## Claims

1. Coupling device for glass-fibre connectors having a front panel (202) with insert openings and at least one coupling (202, 207), which can be inserted into an insert opening of the front panel (202) from the front side, and with a latching spring (214), which engages behind the front panel (202) and by means of which the coupling can be arrested in the front panel, the coupling (201, 207) being releasable from the front side, the coupling (201, 207) having a housing with at least one front plug receptacle (211), a rear plug receptacle (213) and a flange (212, 212'), which projects from the housing and is suitable for bearing against the front panel, **characterized in that** the latching spring (214) comprises two side pieces (203), which are in close contact laterally with two opposite-lying outer walls of the coupling housing, and a pressure plate (204), the side pieces (203) being formed with spring lugs (245) and being connected to each other by means of the pressure plate (204), the pressure plate (204) having a spring leg (223), by means of which the pressure plate (204) is supported on a third outer surface of the housing of the coupling (201, 207), the pressure plate (204) being accessible from the front side in the inserted state of the coupling (201, 207), and the spring lugs (245) engaging behind the front panel (202), it being possible for the coupling (201, 207) to be unlocked again and removed from the front panel by pressure being applied to the pressure plate (204).

2. Coupling device according to Claim 1, **characterized in that** the side pieces (203) lie within the contour of the coupling and the insert openings of the front panel (202) are formed as simple rectangular punches.

3. Coupling device according to Claim 1 or 2, **characterized in that** the side pieces (203) have a clasp (233), which can be positioned behind a recess (244, 247) of the flange (212, 212').

4. Coupling device according to one of the preceding claims, **characterized in that** latching springs (214) are arranged on opposite sides of the coupling (201, 207), their spring legs (223) being supported in opposite directions.

5. Coupling device according to one of the preceding claims, **characterized in that** the coupling is formed as a simplex or duplex coupling.

6. Coupling device according to one of the preceding claims, **characterized in that** the front panel (202) and/or the latching spring (214) consists of metal or plastic or coated metal.

## Revendications

1. Dispositif de raccord pour connecteur de fibres optiques comprenant une plaque avant (202) munie d'orifices d'enfichage et d'au moins un coupleur (201, 207) qui peut être inséré par le côté avant dans un orifice d'enfichage de la plaque avant (202) et comprenant un ressort d'enclenchement (214) en prise avec la plaque avant (202) par l'arrière au moyen duquel le coupleur peut être bloqué dans la plaque avant, le coupleur (201, 207) pouvant être détaché depuis le côté avant, le coupleur (201, 207) présentant un boîtier comprenant au moins un logement de fiche du côté avant (211), un logement de fiche du côté arrière (213) et une bride (212, 212') qui fait saillie du boîtier et qui est conçu pour être monté sur la plaque avant, **caractérisé en ce que** le ressort d'encliquetage (214) comprend deux joues (203) qui se pressent latéralement sur deux parois extérieures opposées du boîtier du coupleur et d'une plaque de compression (204), les joues (203) étant dotées de tenons de ressort (245) et étant reliées entre elles par la plaque de compression (204), la plaque de compression (204) présentant un montant de ressort (223) au moyen duquel la plaque de compression (204) s'appuie sur une troisième surface extérieure du boîtier du coupleur (201, 207), la plaque de compression (204) en situation enfichée du coupleur (201, 207) étant accessible depuis le côté avant et les tenons du ressort (245) étant en prise avec la plaque avant (202) par l'arrière, une pression sur la plaque de compression (204) permettant de nouveau de déverrouiller le coupleur (201, 207) et de le sortir de la plaque avant.

2. Dispositif de raccord selon la revendication 1, **caractérisé en ce que** les joues (203) se trouvent à l'intérieur du contour du coupleur et les orifices d'enfichage de la plaque avant (202) sont réalisés sous la forme d'une simple découpe rectangulaire.

3. Dispositif de raccord selon la revendication 1 ou 2, **caractérisé en ce que** les joues (203) présentent un dispositif de serrage (233) qui peut être positionné derrière un retrait (244, 247) de la bride (212, 212').

4. Dispositif de raccord selon l'une des revendications précédentes, **caractérisé en ce que** des ressorts d'enclenchement (214) dont les montants de ressort (223) s'appuient mutuellement sont disposés sur les côtés opposés du coupleur (201, 207).

5. Dispositif de raccord selon l'une des revendications précédentes, **caractérisé en ce que** le coupleur est réalisé sous la forme d'un coupleur simplex ou duplex.

6. Dispositif de raccord selon l'une des revendications précédentes, **caractérisé en ce que** la plaque avant (202) et/ou le ressort d'enclenchement (214) est en métal ou en matière plastique ou encore en métal enrobé.
